(19) Europäisches Patentamt
European Patent Office
Office européen des brevets

(11) **EP 0 739 758 A1**

(12) **EUROPEAN PATENT APPLICATION**

(43) Date of publication:
30.10.1996 Bulletin 1996/44

(51) Int Cl.$^6$: **B60C 11/00**

(21) Application number: **96302954.1**

(22) Date of filing: **26.04.1996**

(84) Designated Contracting States:
**DE ES FR GB IT**

(30) Priority: **27.04.1995 JP 103945/95**

(71) Applicant: **Bridgestone Corporation**
**Tokyo (JP)**

(72) Inventors:
• **Nakagawa, Masao**
**Kokubunji City, Tokyo (JP)**

• **Sasaki, Ryuichi**
**Kodaira City, Tokyo (JP)**

(74) Representative: **Whalley, Kevin**
**MARKS & CLERK,**
**57-60 Lincoln's Inn Fields**
**London WC2A 3LS (GB)**

(54) **Pneumatic tires having V-shaped directional slant grooves**

(57) In a pneumatic tire having a tread pattern comprised of directional low-slant grooves (1) and directional high-slant grooves (2), tire noise is reduced without adversely affecting tire appearance and production cost by subjecting circumferential length (pitch) of each of the directional low-slant grooves and the directional high-slant grooves to an adequate pitch variation. In particular, the directional low-slant grooves are arranged at 10-20 pitches on the circumference of the tire by using two or more different pitches (Pn) as a pitch variation of the large pitch (P); the directional high-slant grooves are arranged at 3-6 pitches within the large pitch (Pn) by using two or more different pitches (pn) as a pitch variation of the small pitch (p); a pitch ratio of maximum pitch (Pmax) to minimum pitch (Pmin) in the large pitch (Pn) on the full circumference of the tire is 1.05-1.4; and a pitch ratio of maximum pitch (pmax) to minimum pitch (pmin) in the small pitch (pn) within an arbitrary large pitch (Pn) is 1.05-1.6.

FIG_ 1

EP 0 739 758 A1

## Description

This invention relates to pneumatic tires, and more particularly to a pneumatic tire having a tread pattern in which a plurality of directional slant grooves extending from a pattern center toward both sides thereof in V-shaped form are arranged at proper distances in a circumferential direction of the tire. More specifically, the invention relates to a pneumatic tire having a tread pattern comprised of a plurality of directional slant grooves extending outward from an equatorial plane of the-tire in V-shaped form and arranging at proper distances in a circumferential direction of the tire wherein these directional slant grooves comprise a plurality of directional low-slant grooves extending at a relatively small inclination angle of 5-30°, preferably 10-20° with respect to the circumferential direction and a plurality of directional high-slant grooves extending at a relatively large inclination angle of 45-90°, preferably 60-80° with respect to the circumferential direction and a circumferential distance between the directional low-slant grooves is larger than that between the directional high-slant grooves.

Throughout the specification, the term "directional slant groove" means a groove extending slantly in the circumferential direction of the tire so as to designate a rotating direction of the tire or so-called directional tread pattern when the tire is mounted onto a vehicle in such a manner that a portion of the slant groove near to the equatorial plane of the tire is first contacted with ground and subsequently a portion of the slant groove far away from the equatorial plane is contacted with ground.

In pneumatic tires having a tread pattern comprised of V-shaped directional low-slant grooves and V-shaped direction high-slant grooves, noise (pattern noise) produced from the tire during the running is large, so that it is strongly demanded to reduce such a noise (pattern noise).

As a technique of reducing the tire noise (pattern noise), a pitch variation has been known from the past and is put into practice. This pitch variation is a technique of reducing tire noise (pattern noise) based on frequency modulation theory or the like, in which the tire noise (pattern noise) is reduced by properly and continuously arranging minimum pattern units constituting the tread pattern and having two or more different circumferential lengths (pitch) on a circumference of a tire tread to disperse a large peak level of sound pressure, which is concentrically produced at a certain frequency when the pattern is formed by one kind of the pitch, into many side bands having sound pressure levels lower than the above peak level. Strictly speaking, the frequency of the noise is widely dispersed to make the tire noise inaudible though the energy of the noise is not decreased.

There are known pneumatic tires having a directional tread pattern comprised of many directional slant grooves extending from the pattern center toward both sides thereof in V-shaped form and arranging at proper distances in a circumferential direction of the tire, wherein these directional slant grooves comprise a plurality of directional low-slant grooves extending at a relatively small inclination angle with respect to the circumferential direction and a plurality of directional high-slant grooves extending at a relatively large inclination angle with respect to the circumferential direction and a circumferential interval between the directional low-slant grooves is larger than that between the directional high-slant grooves or the number of the directional high-slant grooves is larger than that of the directional low-slant grooves. If it is intended to apply the conventionally known pitch variation technique to such a tire for reducing the tire noise (pattern noise), the directional low-slant grooves are rendered into zigzag form to degrade an appearance, and also the number of engraving models for preparing a vulcanization mold for the tire becomes too large and hence the tire production cost becomes too high. Therefore, the conventional pitch variation technique can not easily be adopted.

That is, when the pitch (pn) as a circumferential interval between the directional high-slant grooves (minimum pattern unit constituting the tread pattern) is two different pitches (p1, p2) or three different pitches (p1, p2, p3) and these grooves are appropriately arranged on the circumference of the tread so as to make the tire noise lowest, the directional low-slant grooves become zigzag.

It is, therefore, an object of the invention to solve the aforementioned problem of the conventional technique and to reduce the tire noise without badly affecting the appearance and tire production cost in the pneumatic tire having the tread pattern comprised of directional low-slant grooves and directional high-slant grooves.

Moreover, as seen from a case that noise is generated from a slick tire having no tread pattern during the running, the tire noise includes noises in addition to the pattern noise. However, the reduction of tire noise aiming at the invention means the reduction pattern noise.

According to the invention, there is the provision of in a pneumatic tire having a tread pattern comprised of a plurality of directional slant grooves extending from a pattern center toward both sides thereof in a V-shaped form and arranging at proper distances in a circumferential direction of the tire, the improvement wherein (1) the directional slant grooves comprise a plurality of directional low-slant grooves extending at a relatively small inclination angle with respect to the circumferential direction and a plurality of directional high-slant grooves extending at a relatively large inclination angle with respect to the circumferential direction, and (2) a large pitch (P) as a circumferential distance between the directional low-slant grooves is larger than a small pitch (p) as a circumferential distance between the directional high-slant grooves, and (3) the directional low-slant grooves are arranged at 10-20 pitches, preferably 12-15 pitches on a circumference of the tire by using two or more different pitches (Pn) as a pitch variation of the large pitch (P), and (4) the directional high-slant grooves are arranged at 3-6 pitches, preferably 4-5 pitches within the large pitch (Pn) by using two or more different pitches (pn) as a pitch variation of the small pitch (p), and (5) a pitch ratio of maximum pitch (Pmax) to minimum pitch (Pmin) in the large pitch (Pn) on a full circumference of the tire is 1.05-1.4, and (6) a pitch ratio of maximum pitch (pmax) to minimum pitch (pmin) in the small pitch (pn) within an arbitrary large pitch (Pn) is 1.05-1.6.

In preferred embodiments of the invention, the pitch ratio (pmax/pmin) in the small pitch (pn) is 1.2-2.2 over a full circumference of the tire, and the pitch ratio in the adjoining arbitrary small pitches (p) is not more than 1.4 over a full circumference of the tire, and a pitch variation of the small pitches (p) arranged within the large pitch (P) is selected from 1-5 kinds of pitch arrangement, and the inclination angle of the directional low-slant groove with respect to the circumferential direction is 5-30°, preferably 10-20° and the inclination angle of the directional high-slant groove with respect to the circumferential direction is 45-90°, preferably 60-80°.

The invention will be described with reference to the accompanying drawing, wherein:

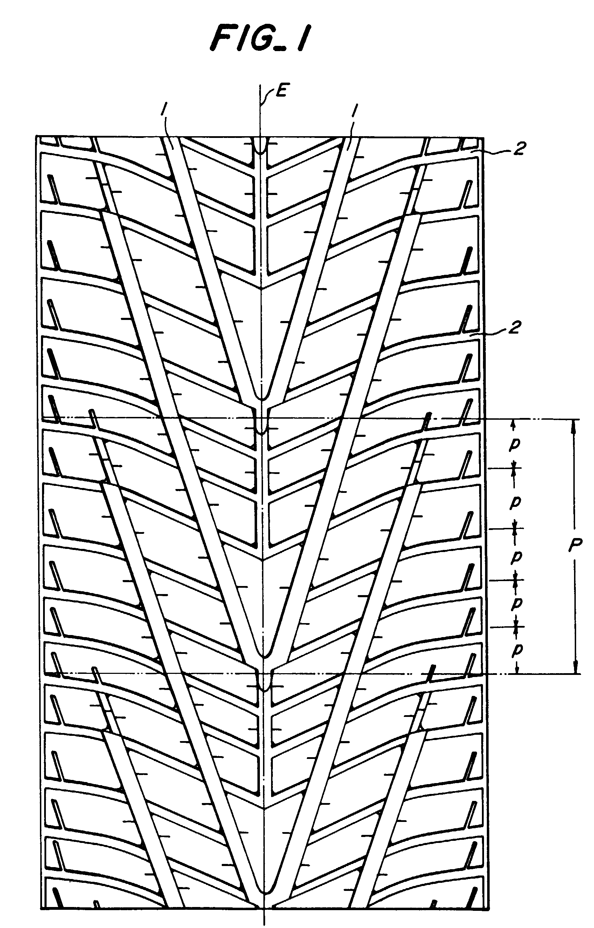

Fig. 1 is a schematic view of an embodiment of the tread pattern in the pneumatic tire according to the invention.

In the pneumatic tire according to the invention, the directional low-slant grooves are subjected to pitch variation using two or more different pitches (Pn) as the large pitch (P) to arrange them at the number of 10-20 pitches, preferably 12-15 pitches on the circumference of the tire and the pitch ratio (Pmax/Pmin) in the large pitch (Pn) over a full circumference of the tire is 1.05-1.4 as mentioned above, whereby a primary peak of a low frequency region generated from the large pitch (P) of the directional low-slant groove can be dispersed or controlled.

Furthermore, the directional high-slant grooves are subjected to pitch variation using two or more different pitches (pn) as the small pitch (p) to arrange them at the number of 3-6 pitches, preferably 4-5 pitches within the large pitch (P) and the pitch ratio (pmax/pmin) in the small pitch (pn) is 1.05-1.6 within an arbitrary large pitch (Pn) as mentioned above, whereby a primary peak of a high frequency region generated from the small pitch (p) of the directional high-slant groove can be dispersed or controlled.

In the pneumatic tire according to the invention, the directional high-slant grooves having two or more different pitches (pn) as the small pitch (p) are arranged within the large pitch (P) between the directional low-slant grooves as previously mentioned, so that the directional low-slant grooves hold their linearity of the outward extending portion without extremely forming zigzag shape and hence the problem in the appearance is easily solved.

When the number of pitches (Pn) in the arrangement of the directional low-slant grooves is less than 10, noise of low frequency component becomes remarkable, while when it exceeds 20, the block defined by the directional slant grooves becomes small and the block rigidity is lacking and hence the steering stability on dry road surface lowers.

On the other hand, when the number of pitches (pn) in the arrangement of the directional high-slant groove within the large pitch (Pn) is less than 3, the large pitch (P) becomes short to make the resulting block small and the block rigidity is lacking and hence the steering stability on dry road surface lowers, while when it exceeds 6, the large pitch (P) becomes long to decrease the number of large pitches and hence noise of low frequency component becomes remarkable.

In the pneumatic tire according to the invention, the pitch variation of the small pitches (pn) arranged in the large pitch (Pn) is preferably selected from 1 to 5 kinds of pitch arrangement. In general, as the arrangement number in the pitch variation becomes large, the freedom degree of design for the reduction of tire noise increases, but the number of engraving models for preparing a vulcanization mold for the tire becomes very large and hence the tire production coat becomes higher. If 5 small pitches (pn) are arranged in each large pitch (Pn) by using three kinds of small pitch (p), the pitch variation of about 140 arrangements is existent. From a viewpoint of the freedom degree of design for the reduction of tire noise, the pitch arrangement is sufficient to be 5 kinds. If the pitch arrangements exceeds 5 kinds, low noise tires are not obtained and the cost rather increases.

The vulcanization mold used in the production of the pneumatic tire according to the invention may be manufactured by using a plaster model prepared by large pitch (Pn) units, so that it is not necessary to manufacture the mold from a plaster model of small pitch (pn) units as usual and the production cost of the vulcanization mold can largely be decreased.

As previously mentioned, it is favorable that the pitch ratio (Pmax/Pmin) in the large pitch (Pn) over the full circumference of the tire is 1.05-1.4, while the pitch ratio (pmax/pmin) in the small pitch (pn) within an arbitrary large pitch (Pn) is 1.05-1.6. When each of the pitch ratios (Pmax/Pmin, pmax/pmin) is less than the above lower limit, the basic effect of the pitch variation is lost and hence the noise is not dispersed. While, when it exceeds the upper limit, the difference between the maximum pitch and the minimum pitch becomes too large and the block rigidity becomes un uniform and hence the uneven wear is apt to be caused.

According to the invention, the inclination angle of the directional low-slant groove with respect to the circumferential direction is 5-30°, preferably 10-20°.

When the inclination angle is less than 5°, the block defined by the directional low-slant grooves becomes small and the block rigidity is lacking and hence the steering stability on dry road surface lowers. In order to make large the block to enhance the block rigidity, therefore, the large pitch (P) should be made large and the number of the large pitches (P) should be decreased. In the latter case, the pitch number is too small and hence noise of low frequency component becomes remarkable.

When the inclination angle exceeds 30°, the drainage performance of the directional low-slant groove on wet road surface lowers and hence the function of preventing or controlling the hydroplaning phenomenon is lowered. Furthermore, a cross angle between the directional low-slant groove and the directional high-slant groove becomes too small to lack the block rigidity and hence the steering stability on dry road surface lowers and the uneven wear is apt to be caused.

On the other hand, it is favorable that the inclination angle of the directional high-slant groove with respect to the circumferential direction is 45-90°, preferably 60-80°.

When the inclination angle is less than 45°, the cross angle between the directional low-slant groove and the directional high-slant groove becomes too small and the block defined among these grooves becomes small and the block rigidity is lacking and hence the steering stability on dry road surface lowers and the uneven wear is apt to be caused. While, when it exceeds 90°, a stepping-in end portion of the tread at the ground contact region is coincident with a stepping-in corner portion of the directional high-slant groove and hence the noise becomes undesirably large.

The following examples are given in illustration of the invention and are not intended as limitations thereof.

In Fig. 1 is shown an embodiment of the tread pattern according to the invention used in a pneumatic tire for a passenger car having a tire size of 225/50R16.

The pneumatic tire of Fig. 1 has a tread pattern comprised of a plurality of directional slant grooves extending from an equator (E) of the tire toward both sides thereof in a V-shaped form and arranging at proper distances in a circumferential direction of the tire, in which the pattern center is located on the equator (E).

The directional slant grooves comprise a plurality of directional low-slant grooves (1) extending at a relatively small inclination angle with respect to circumferential direction and a plurality of directional high-slant grooves (2) extending at a relatively large inclination angle with respect to the circumferential direction. The inclination angle of the directional low-slant groove (1) is about 18°, while the inclination angle of the directional high-slant groove (2) is about 65°.

In the tire of Example 1, the directional low-slant grooves (1) are arranged at the number of 12 pitches on the circumference of the tire by pitch variation using two kinds of pitch (P1, P2) as the large pitch (P). When an average of P1 and P2 is 10, P1 = 9.5 and P2 = 10.5. In other words, when the circumferential length of the tire is L, P1 = 0.95L/12 and P2 = 1.05L/12.

Furthermore, the directional high-slant grooves (2) are arranged at the number of 5 pitches within each of the large pitches (P1, P2) by pitch variation using three kinds of pitch (p1, p2, p3) as the small pitch (p). Therefore, these grooves (2) are arranged at the number of 12 x 5 = 60 small pitches (p) on the circumference of the tire. When an average of p1, p2 and p3 within the large pitch (P1, P2) is 10, p1 = 8.5, p2 = 10, and p3 = 11.5.

On the full circumference of the tire, the pitch ratio (Pmax = P2/Pmin = P1) in the large pitch (P1, P2) is 10.5/9.5 = 1.11.

In an arbitrary large pitch (P1, P2), the pitch ratio (pmax = p3/pmin = p1) of the small pitch (p1, p2, p3) is 11.5/8.5 = 1.35. Moreover, the pitch ratio (pmax/pmin) of the small pitch (p1, p2, p3) is 11.5 x (10.5/10)/8.5 x (9.5/10) = 1.50 on the full circumference of the tire.

The pitch variation in the tire of Example 1 will be described concretely below.

As mentioned above, the directional low-slant grooves (1) are arranged at a total number of 12 pitches by using 6 pitches every each kind of pitch (P1, P2) on the circumference of the tire, in which the arrangement of pitch variation on the circumference of the tire is P2 + P1 + P2 + P2 + P1 + P2 + P1 + P1 + P2 + P1 + P2 + P1.

On the other hand, the directional high-slant grooves (2) are arranged at the number of 5 pitches within the large pitch (P1, P2) by using three kinds of pitch (p1, p2, p3), in which the arrangement of pitch variation has the following four kinds A, B, C and D;

A: p1 + p2 + p2 + p2 + p3

B: p3 + p2 + p2 + p2 + p1

C: p1 + p1 + p2 + p3 + p3

D: p3 + p3 + p2 + p1 + p1

The pitch variation combining the large pitch arrangement (P1, P2) and the small pitch arrangement (p1, p2, p3) on the circumference of the tire is P2(A) + P1(B) + P2(C) + P2(A) + P1(D) + P2(C) + P1(D) + P1(D) + P2(A) + P1(D) + P2(C) + P1(D).

As seen from the above arrangement, A and C are combined with only P2, while B and D are combined with only P1. Furthermore, a total of B, A, A, C, C, D, D, D, D and D are used as the pitch variation for the directional high-slant groove. Although three kinds of small pitch (p) are existent within the large pitch (P), the kind of small pitch (p) is 6 on the circumference of the tire combining the large pitch and the small pitch.

The arrangement of small pitch (p) within the large pitch (P) will be described in detail below.

The small pitches (p1, p2, p3) within the large pitch (P1) are p1:p2:p3 = (8.5:10:11.5) x 9.5/10 = 8.1:9.5:10.9, while the small pitches (p1, p2, p3) within the large pitch (P2) are p1:p2:p3 = (8.5:10:11.5) x 10.5/10 = 8.9:10.5:12.1.

Therefore, the arrangement of small pitch (p) on the circumference of the tire is 6 kinds of 8.1, 8.9, 9.5, 10.5, 10.9 and 12.1 according to size.

Among 6 kinds of small pitch (p), the pitch ratio of maximum pitch (p3 within P2) to minimum pitch (pl within P1) is 12.1/8.1 = 1.49. However, when the large pitches (P1, P2) and the pitch variations of small pitches (A, B, C, D) within the large pitch are combined as mentioned above, the maximum pitch (p3 within P2) is not adjacent to the minimum pitch (p1 within P1). As a result, the maximum value of the pitch ratio in an arbitrary adjacent small pitch (p) is an adjacent position of p3 within P2 and pl within P1 in [.... + P2(C) + P2(A) + ....], in which the value is 12.1/8.9 = 1.36.

The tire of Example 2 is the same as in Example 1 except that the arrangement of pitch variation on the circumference of the tire is concretely described below.

The pitch variation of large pitches (P1, P2) in the directional low-slant groove (1) on the circumference of the tire is P1 + P2 + P1 + P1 + P2 + P1 + P2 + P2 + P1 + P2 + P1 + P2.

On the other hand, the directional high-slant grooves (2) are arranged at the number of 5 pitches within the large pitch (P1, P2) by using three kinds of pitch (p1, p2, p3), in which the arrangement of pitch variation has the same four kinds A, B, C and D as in Example 1.

The arrangement of pitch variation on the circumference combining the the large pitch arrangement (P1, P2) and the small pitch arrangement (p1, p2, p3) is P1(A) + P2(B) + P1(C) + P1(A) + P2(D) + P1(C) + P2(D) + P2(D) + P1(A) + P2(D) + P1(C) + P2(D).

In the tire of Example 3, the directional low-slant grooves (1) are arranged at the number of 12 pitches on the circumference of the tire by pitch variation using three kinds of pitch (P1, P2, P3) as the large pitch (P). When an average of P1, P2 and P3 is 10, P1 = 8.5, P2 = 10 and P3 = 11.5. In other words, when the circumferential length of the tire is L, P1 = 0.85L/12, P2 = L/12 and P3 = 1.15L/12.

On the full circumference of the tire, the pitch ratio of maximum pitch to minimum pitch (Pmax/Pmin = P3/P1) in the large pitch (P) is 11.5/8.5 = 1.35.

Furthermore, the directional high-slant grooves (2) are arranged at the number of 5 pitches within each of the large pitches (P1, P2, P3) by pitch variation using three kinds of pitch (p1, p2, p3) as the small pitch (p). Therefore, these grooves (2) are arranged at the number of 12 x 5 = 60 small pitches (p) on the circumference of the tire. When an average of p1, p2 and p3 within the large pitch (P1, P2, P3) is 10, p1 = 8.5, p2 = 10, and p3 = 11.5.

In an arbitrary large pitch (P), the pitch ratio (pmax = p3/pmin = p1) of the small pitch (p) is 11.5/8.5 = 1.35.

Moreover, the pitch ratio (pmax/pmin) of the small pitch (p1, p2, p3) is 11.5 x (11.5/10)/8.5 x (8.5/10) = 1.83 on the full circumference of the tire.

As mentioned above, the directional low-slant grooves (1) are arranged at a total number of 12 pitches by using three kinds of pitch (P1, P2, P3) on the circumference of the tire, in which the arrangement of pitch variation on the circumference of the tire is P1 + P2 + P3 + P2 + P1 + P2 + P3 + P2 + P1 + P2 + P3 + P2.

On the other hand, the directional high-slant grooves (2) are arranged at the number of 5 pitches within the large pitch (P1, P2, P3) by using three kinds of pitch (p1, p2, p3), in which the arrangement of pitch variation is p1 + p2 + p3 + p2 + p1.

The small pitches (p1, p2, p3) within the large pitch (P1) are p1:p2:p3 = (8.5:10:11.5) x 8.5/10 = 7.2:8.5:9.8, and the small pitches (p1, p2, p3) within the large pitch (P2) are p1:p2:p3 = (8.5:10:11.5) x 10/10 = 8.5:10:11.5, and the small pitches (p1, p2, p3) within the large pitch (P3) are p1:p2:p3 = (8.5:10:11.5) x 11.5/10 = 9.8:11.5:13.2.

Although 3 x 3 = 9 kinds of small pitch (p) is formed by a simple calculation, the small pitches (p) on the circumference of the tire are 6 kinds of 7.2, 8.5, 9.8, 10, 11.5 and 13.2 according to size in case of eliminating the overlapped pitch.

The maximum value of the pitch ratio in an arbitrary adjacent small pitch (p) is 1.18.

The tire of Example 4 is the same as in Example 3 except that the large pitches (P1, P2, P3) are P1 = 9, P2 = 10 and P3 = 11 when an average value of P1, P2 and P3 is 10 and the values of small pitches (pn) differ accompanied therewith and the pitch ratio (pmax/pmin) of the small pitch (pn) on the circumference of the tire is 1.65.

The tire of Example 5 is the same as in Example 3 except that the large pitches (P1, P2, P3) are P1 = 9.5, P2 = 10 and P3 = 11.5 when an average value of P1, P2 and P3 is 10 and the values of small pitches (pn) differ accompanied therewith and the pitch ratio (pmax/pmin) of the small pitch (pn) on the circumference of the tire is 1.49.

The tire of Example 6 is the same as in Example 3 except that the small pitches (p1, p2, p3) are p1 = 9, p2 = 10 and p3 = 11 when an average value of p1, p2 and p3 within each of the large pitches (P1, P2 and P3) is 10 and the values of small pitches (pn) differ accompanied therewith and the pitch ratio (pmax/pmin) of the small pitch (pn) on the circumference of the tire is 1.65.

The tire of Example 7 is the same as in Example 6 except that the small pitches (p1, p2, p3) are p1 = 9.5, p2 = 10 and p3 = 10.5 when an average value of p1, p2 and p3 within each of the large pitches (P1, P2 and P3) is 10 and the values of small pitches (pn) differ accompanied therewith and the pitch ratio (pmax/pmin) of the small pitch (pn) on the circumference of the tire is 1.49.

The conventional pneumatic tire is the same as in Example 1 except that the large pitches (P1, P2) are P1 = P2. In the conventional tire, only the small pitches are subjected to pitch variation. Since the all of the large pitches (P) have the same length, the linearity of the directional low-slant groove (1) is maintained.

A test for evaluating tire noise is made with respect to the above tires of Examples 1-7 and the conventional tire according to a tire noise test method of Automobile standard JASOC 606. The test conditions are a rim of 8J x 16, an internal pressure of 3.1 kgf/cm$^2$, a load of 500 kgf and a speed of 60 km/h. The measuring terms are a primary peak of total small pitches (p) at about 530 Hz and a noise (sound pressure level) at a full frequency band.

The evaluation results are shown in Table 1.

Table 1

|  | Primary peak | Full frequency band |
|---|---|---|
| Conventional Example | 75.0 dB | 85.2 dB |
| Example 1 | 72.1 dB | 82.0 dB |
| Example 2 | 72.2 dB | 82.4 dB |
| Example 3 | 71.6 dB | 81.5 dB |
| Example 4 | 71.7 dB | 81.9 dB |
| Example 5 | 72.0 dB | 82.1 dB |
| Example 6 | 72.3 dB | 82.4 dB |
| Example 7 | 72.5 dB | 82.7 dB |

As seen from the results of Table 1, the tire noise is considerably reduced in the pneumatic tires according to the invention as compared with the conventional pneumatic tire.

**Claims**

1. A pneumatic tire having a tread pattern comprised of a plurality of directional slant grooves extending from a pattern center toward both sides thereof in a V-shaped form and spaced apart in the circumferential direction of the tire, characterized in that (a) the directional slant grooves comprise a plurality of directional low-slant grooves (1) extending at a relatively small inclination angle with respect to the circumferential direction and a plurality of directional high-slant grooves (2) extending at a relatively large inclination angle with respect to the circumferential direction; (b) a large pitch (P) as a circumferential distance between the directional low-slant grooves (1) is larger than a small pitch (p) as a circumferential distance between the directional high-slant grooves (2); (c) the directional low-slant grooves (1) are arranged at 10-20 pitches on the circumference of the tire by using two or more different pitches (Pn) as a pitch variation of the large pitch (P); (d) the directional high-slant grooves (2) are arranged at 3-6 pitches within the large pitch (Pn) by using two or more different pitches (pn) as a pitch variation of the small pitch (p); (e) a pitch ratio of maximum pitch (Pmax) to minimum pitch (Pmin) in the large pitch (Pn) on the full circumference of the tire is 1.05-1.4; and (f) a pitch ratio of maximum pitch (pmax) to minimum pitch (pmin) in the small pitch (pn) within an arbitrary large pitch (Pn) is 1.05-1.6.

2. A pneumatic tire as claimed in claim 1, characterized in that the pitch ratio (pmax/pmin) in the small pitch (pn) is 1.2-2.2 over the full circumference of the tire.

3. A pneumatic tire as claimed in claim 1 or 2, characterized in that the pitch ratio in the adjoining arbitrary small pitches (p) is not more than 1.4 over the full circumference of the tire.

4. A pneumatic tire as claimed in any of claims 1 to 3, characterized in that a pitch variation of the small pitches (p) within the large pitch (Pn) is the same.

5. A pneumatic tire as claimed in any of claims 1 to 3, characterized in that a pitch variation of the small pitches (p) arranged within the large pitch (Pn) is selected from 2-5 kinds of pitch arrangement.

6. A pneumatic tire as claimed in any of claims 1 to 5, characterized in that the inclination angle of the directional low-slant grooves (1) with respect to the circumferential direction is 5-30°.

7. A pneumatic tire as claimed in claim 6, characterized in that the said inclination angle of the directional low-slant grooves (1) is 10-20°.

8. A pneumatic tire as claimed in any of claims 1 to 7, characterized in that the inclination angle of the directional high-slant grooves (2) with respect to the circumferential direction is 45-90°.

9. A pneumatic tire as claimed in claim 8, characterized in that the said inclination angle of the directional high-slant grooves (2) is 60-80°.

10. A pneumatic tire as claimed in any of claims 1 to 9, characterized in that the directional low-slant grooves (1) are arranged at a number of 12-15 pitches on the circumference of the tire.

11. A pneumatic tire as claimed in any of claims 1 to 10, characterized in that the directional high-slant grooves (2) are arranged at a number of 4-5 pitches within the large pitch (P).

12. A method of producing a pneumatic tire as claimed in any of claims 1 to 11, which comprises preparing a segment of a vulcanization mold for the tire by using a plaster model defined by large pitch (P) units.

# FIG_1

## EUROPEAN SEARCH REPORT

European Patent Office

Application Number

EP 96 30 2954

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR-A-2 666 053 (UNIROYAL ENGLEBERT GMBH) 28 February 1992 * the whole document * | 1-12 | B60C11/00 |
| A | DE-A-35 22 967 (FORSCH KRAFTFAHRWESEN UND FAHR) 2 January 1987 | 1 | |
| A | DE-U-88 12 422 (CONTINENTAL) 2 March 1989 | 1 | |
| A | EP-A-0 627 332 (PIRELLI) 7 December 1994 | 1 | |
| A | PATENT ABSTRACTS OF JAPAN vol. 017, no. 139 (M-1385), 22 March 1993 & JP-A-04 317805 (BRIDGESTONE CORP), 9 November 1992, * abstract * | 1 | |
| A | PATENT ABSTRACTS OF JAPAN vol. 011, no. 131 (M-584), 24 April 1987 & JP-A-61 271104 (YOKOHAMA RUBBER CO LTD:THE), 1 December 1986, * abstract * | 1 | TECHNICAL FIELDS SEARCHED (Int.Cl.6) B60C |

The present search report has been drawn up for all claims

| Place of search | Date of completion of the search | Examiner |
|---|---|---|
| THE HAGUE | 5 August 1996 | Baradat, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)